# EUROPÄISCHE PATENTSCHRIFT

(11) **EP 1 693 442 B1**
(45) Veröffentlichungstag und Bekanntmachung des Hinweises auf die Patenterteilung: **03.01.2007**
(21) Anmeldenummer: 05003306.7
(22) Anmeldetag: 16.02.2005
(51) Int. Cl.: C12F 3/02

(54) **Aerosolabscheider in einer Anlage zur Rückgewinnung von Kohlendioxid**
Aerosol separator in a device for recovering carbon dioxide
Séparateur d'aérosol dans un dispositiv pour récupérage de dioxide de carbone

(43) Veröffentlichungstag der Anmeldung: 23.08.2006
(73) Patentinhaber: KRONES Aktiengesellschaft, 93073 Neutraubling (DE)
(72) Erfinder: Bender, Harald, 85354 Freising (DE)
(74) Vertreter: Grünecker, Kinkeldey, Stockmair & Schwanhäusser Anwaltssozietät

(56) Entgegenhaltungen:
- EP-A- 0 646 756
- EP-A- 1 308 502
- WO-A-03/011757
- DE-A1- 19 755 213
- DE-B- 1 223 330
- DE-C- 890 633
- GB-A- 1 566 877
- US-A- 5 425 929
- DATABASE WPI Section Ch, Week 200503 Derwent Publications Ltd., London, GB; Class E36, AN 2005-028326 XP002331226 & RU 2 237 615 C1 (AGAFONOV G V) 10. Oktober 2004 (2004-10-10)
- PATENT ABSTRACTS OF JAPAN Bd. 2000, Nr. 11, 3. Januar 2001 (2001-01-03) & JP 2000 225183 A (IWATANI INTERNATL CORP), 15. August 2000 (2000-08-15)

## Beschreibung

Die Erfindung betrifft eine Anlage zur Rückgewinnung von CO₂ und ein Verfahren zum Rückgewinnen von bei der Gärung anfallendem CO₂ gemäß den Oberbegriffen der Ansprüche 1 und 8.

Eine solche Anlage b.z.w. ein solches Verfahren ist bereits aus der EP1 308 502 A1 bekannt.

CO₂-Rückgewinnungsanlagen bzw. entsprechende Verfahren werden derzeit in Brauereien eingesetzt, um das bei der Hauptgärung anfallende CO₂ rückzugewinnen, um es dann für andere Vorgänge wie beispielsweise Lagertankvorspannen und Leerdrücken, Karbonisieren, Abfüllen etc. wieder zu verwenden.

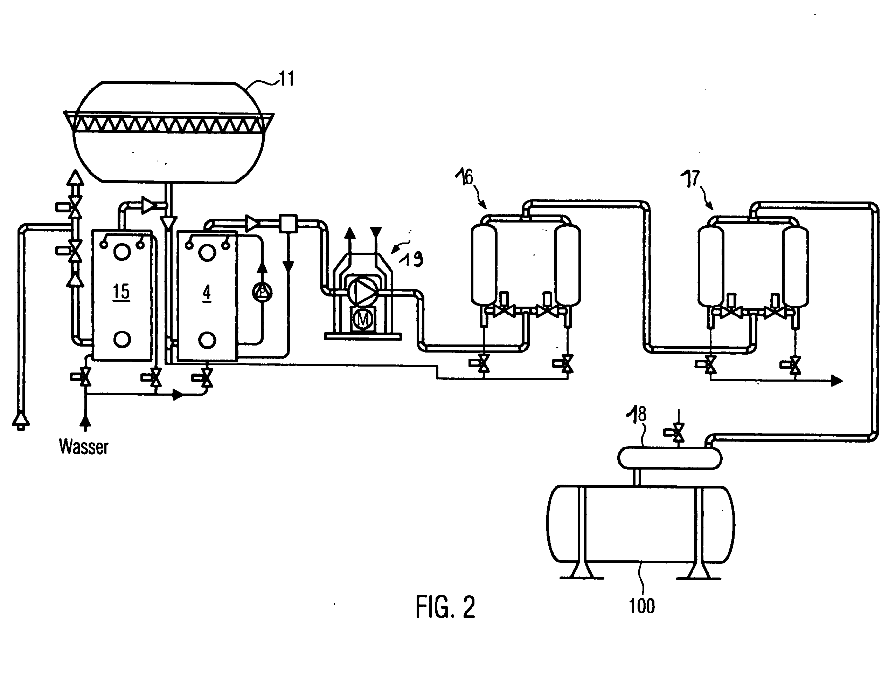

In der Fig. 2 ist ein Beispiel für eine CO₂-Rückgewinnungsanlage gezeigt. Dabei wird das CO₂ aus den Gärgefäßen (nicht dargestellt) über entsprechende CO₂-Entnahmevorrichtungen entnommen, und zunächst einen Schaumabscheider 15 zugeführt, der dazu dient, eventuell mitgerissenen Schaum zurückzuhalten. Das CO₂-Gas sammelt sich in einem großen CO₂-Gasbehälter einen sogenannten CO₂-Gasballon 11, der als Puffer für die Sammlung des Gases dient. Im Gaswascher 4 wird das CO₂ von wasserlöslichen Verunreinigungen befreit. Ein CO₂-Kompressor 19 verdichtet das CO₂ in bekannter Weise auf einen Verflüssigungsdruck in einem Bereich von 15 bis 22 bar. Das verflüssigte CO₂ wird dann einer Trocknung und Reinigung (oder umgekehrt) unterzogen, wobei hier das CO₂ zunächst einem Trockner 16 und dann einem Filter 17 zugeführt wird. In einer CO₂-Verflüssigungsanlage 18 kondensiert dann das verdichtete CO₂ bei niedrigen Temperaturen und wird dann in einem CO₂-Lagertank 100 zwischengelagert und kann auch für den sofortigen Gebrauch in der Brauerei wieder entnommen werden.

Bei der CO₂-Rückgewinnung können jedoch insbesondere mit vermehrter Anwendung von High-Gravity-Verfahren im Fermentationsbereich, d.h. beim Brauen mit hoher Würzekonzentration, sowie bei der Optimierung des Nettoinhalts der Fermenter (Reduzierung des Steigraums) vermehrt Schäden beobachtet werden. Hierbei treten auch massive Korrosionserscheinungen an den oben gezeigten Rohrleitungen, Apparaten und Maschinen auf (meistens Lochfraß). Die Funktionsfähigkeit, insbesondere der CO₂-Verdichter wird durch Ablagerungen von Aerosolen und ihren Inhaltsstoffen erheblich beeinträchtigt. Dies führt zur Verminderung der Standzeit der Arbeitsventile sowie zu einer mittelfristigen Schädigung von Stopfbüchsen und Kolbenstangen, was zum Ausfall des gesamten Systems führen kann.

Der vorliegenden Erfindung liegt daher die Aufgabe zugrunde, eine CO₂-Rückgewinnungsanlage zum Rückgewinnen von bei der Gärung anfallenden CO₂ sowie ein entsprechendes Verfahren bereitzustellen, mit der Schäden in den Rohrleitungen, Apparaten und Maschinen der Rückgewinnungsanlage verhindert werden können.

Erfindungsgemäß wird diese Aufgabe durch die Merkmale der Ansprüche 1, 8 und 12 gelöst.

Dadurch, dass vor dem CO₂-Kompressor ein Aerosolabscheider angeordnet ist, mit dem das Aerosol beladene CO₂-Gas von Aerosolen befreit wird, ist es möglich zu verhindem, dass sich Aerosole und mit diesen mittransportierte Inhaltsstoffe in den Anlageteilen der CO₂-Rückgewinnungsanlage niederschlagen. Derartige Aerosole treten insbesondere bei der Anwendung des High-Gravity-Verfahrens im Fermentationsbereich sowie der Optimierung des Nettoinhalts der Fermenter als Inhaltsstoff in CO₂-Gas auf. Aerosole sind feinste Flüssigkeitströpfchen mit einem Durchmesser zwischen 12 µm und annähemd 0 µm. Diese Aerosole tragen Inhaltsstoffe des fermentierenden Gemischs mit dem CO₂-Gasstrom zur CO₂-Rückgewinnungsanlage mit. Derartige Inhaltsstoffe sind beispielsweise Zucker, Kohlenwasserstoffe, organische Komponenten, die im Kompressor verkohlen und diesen und nachfolgende Komponenten der Rückgewinnungsanlage wie oben beschrieben deutlich schädigen. Durch die Verwendung des Aerosolabscheiders vor dem Kompressor kann jedoch eine derartige Beschädigung verhindert werden.

Gemäß einer bevorzugten Ausführungsform weist der Aerosolabscheider eine Bewässerungseinrichtung auf, um während des Abscheidens das aerosolbeladene CO₂-Gas zu bewässern. Normalerweise funktionieren Aerosolabscheider "trocken". Da aber die von den Aerosolen mitgetragenen Stoffe, insbesondere diverse Zucker,etc. klebrig sind, ist eine Bewässerung notwendig. Das Wasser kann sich dann mit den abgeschiedenen Aerosolen und ihren Inhaltsstoffen am Aerosolabscheiderboden sammeln und kann dort niveaugesteuert ausgeschleust werden.

In bevorzugter Art und Weise umfasst die Bewässerungseinrichtung mindestens eine Düse, um das aerosolbeladene CO₂-Gas , beziehungsweise die Abscheideelemente mit Wasser zu bedüsen.

Der Aerosolabscheider weist zumindest ein flächiges Abscheideelement auf, durch das das aerosolbeladene CO₂-Gas strömt. Dabei bewässert die Bewässerungseinrichtung zumindest das eine Abscheideelement mit Wasser.

Gemäß einem bevorzugten Ausführungsbeispiel der vorliegenden Erfindung ist vor dem Aerosolabscheider ein Gaswascher angeordnet. Ein derartiger traditioneller Wascher, d.h. Sprühdüsenwascher, Wascher mit eingebauten strukturierten Packungen (z.B. Sulzer Mella Pach etc.) bzw. Wascher mit Füllkörperfüllungen (z.B. Pallringe, Raschig-Ringe etc.), können zwar Aerosole nicht aus dem CO₂-Gasstrom entfernen, vermeiden jedoch eine übermäßige Belastung des Aerosolabscheiders durch eine entsprechende Vorreinigung. Insbesondere befreit der Gaswascher das CO₂ von wasserlöslichen Verunreinigungen.

Gemäß einer besonderen Ausführungsform ist ein CO₂-Gasballon zwischen Aerosolabscheider und CO₂-Kompressor angeordnet, der als Zwischenspeicher dient. Die Anordnung des CO₂-Gasballons zwischen Aerosolabscheider und CO₂-Kompressor ermöglicht, dass bereits gereinigtes Gas zwischengelagert werden kann.

Die vorliegende Erfindung wird nachfolgend unter Bezugnahme der folgenden Figuren näher erläutert werden:
- Fig. 1: zeigt den schematischen Aufbau einer Ausführungsform der vorliegenden Erfindung,
- Fig. 2: zeigt eine CO₂-Rückgewinnungsanlage, wie sie aus dem Stand der Technik bekannt ist.

Die erfindungsgemäße CO₂-Rückgewinnungsanlage wird beim Brauen von Bier eingesetzt.

Bei der erfindungsgemäßen CO₂-Rückgewinnungsanlage wird zunächst wie beim Stand der Technik aerosolbeladenes CO₂-Gas aus dem Gärbottich über eine CO₂-Entnahmevorrichtung (nicht dargestellt) entnommen. Das abgeleitete CO₂-Gas ist dabei aerosolbelastet. Der exakte Entstehungsort der Aerosole ist nicht wissenschaftlich nachgewiesen. Man geht jedoch davon aus, dass sie beim Drucksprung entstehen, welche Gasblasen beim Durchgang durch die Flüssigkeitsoberfläche im Fermenter verursachen.

Mit vermehrter Anwendung von High-Gravity-Verfahren im Fermentationsbereich, d.h. bei Verwendung von hochprozentiger Würze (größer 12 %) treten vermehrt derartige Aerosole im CO₂-Gas auf. Auch bei der Optimierung des Nettoinhalts der Fermenter (Reduzierung des Steigraums) werden vermehrt Aerosole beobachtet.

Gemäß der vorliegenden Erfindung wird das aerosolbeladene CO₂-Gas zunächst einem traditionellen Vorwäscher 4 über eine entsprechende Zuführung 9 zugeführt. Als traditionellen Gaswascher bezeichnet man beispielsweise Sprühdüsenwascher, Wascher mit eingebauten strukturierten Packungen (z.B. Sulzer-Mella Pach etc.) und Wascher mit Füllkörperfüllungen (z.B. Pallringe, Raschig-Ringe etc.). Der Gaswascher 4 entfernt wasserlösliche Verunreinigungen aus dem CO₂. Die ausgewaschenen Verunreinigungen können über das Ventil 13 vom unteren Ende des Gaswaschers 4 abgeleitet werden. Die ausgewaschenen Verunreinigungen können über entsprechende Füllstandsensoren/Schalter LSH (Niveau Hoch- Ventil 13 geöffnet) und LSL (Niveau tief - Ventil 13 geschlossen) niveaugesteuert abgeleitet werden. Es ist auch ein mechanisches Schwimmerventil (Klospülungsprinzip) möglich.

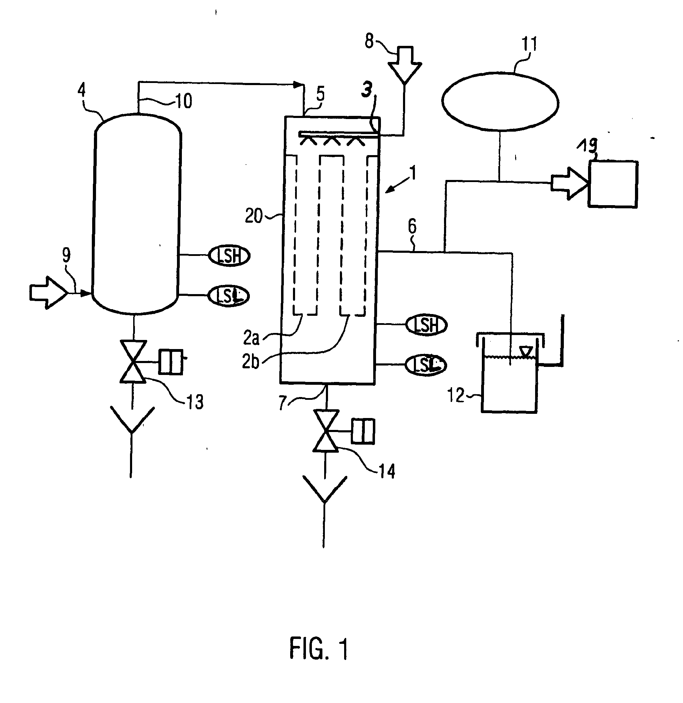

Vom Ausgang 10 des Gaswaschers 4 wird das vorgereinigte immer noch mit Aerosolen beladene CO₂-Gas dem Aerosolabscheider 1 über die Zuführung 5 zugeführt. Aerosolabscheider sind in der chemischen Verfahrenstechnik verbreitet im Einsatz, z.B. bei der Reinigung von Rauchgasen oder bei der Entfemung von Lösemitteln aus Luftströmen. Ein derartiger Aerosolabscheider besteht aus mindestens einem flächigen Abscheideelement, welches in einem Behälter 20 angeordnet ist. Bei der in Fig. 1 gezeigten Ausführungsform sind beispielsweise zwei rohrförmige Elemente 2a, 2b in dem Behälter angeordnet. Die Elementwände bestehen hier aus einem Kunststoffgewebe. Die Elemente sind stehend im Behälter 20 eingebaut. Das zu reinigende CO₂-Gas wird in die Elemente 2a, b geleitet und verlässt die Elemente radial.

Beim Durchströmen der Elemente werden aufgrund spezifischer Mechanismen, wie beispielsweise Diffusionseffekt, Trägheitsabscheidung und Sperreffekt, die Aerosole inklusive der mittransportierten Stoffe aus dem CO₂-Gas entfernt. Das CO₂-Gas kann den Abscheider 1 mehr oder weniger aerosolfrei über den Auslass 6 verlassen. Der Aerosolabscheider ermöglicht, dass annähernd 100 % aller Tröpfchen > 3 µm bis 99 % aller Tröpfchen < 3µm der Aerosole entfernt werden.

Das in Zusammenhang mit Fig. 1 beschriebene Ausführungsbeispiel für einen Aerosolabscheider ist nur beispielhaft. So müssen die Elemente nicht rohrförmig ausgebildet sein, sondern können beispielsweise auch als Filtermatten gebildet werden, durch die das aerosolbeladene CO₂-Gas durchströmt. Das Abscheideelement muss auch nicht zwangsläufig aus einem Kunststoffgewebe gebildet sein, sondem kann beispielsweise auch aus einem Glasfasergewebe oder einem Kunststoffnadelfilz, beispielsweise einem Polyesternadelfilz gebildet sein oder aus einem Vlies etc.

Da bei der CO₂-Rückgewinnung, die von den Aerosolen mitgetragenen Stoffe klebrig sind (wie vorab geschrieben diverse Zucker, etc.) ist es vorteilhaft, wie in Fig. 1 gezeigt, eine Bewässerungseinrichtung 3 vorzusehen. Die Bewässerungseinrichtung 3 ist in dem Gehäuse 20 des Aerosolabscheiders 1 vorgesehen. Hier weist die Bewässerungseinrichtung 3 einen Zulauf 8 für Wasser auf, sowie mehrere Düsen, die die Abscheideelemente 2a, 2b mit Wasser bedüsen. Das Wasser sammelt sich dann mit den abgeschiedenen Aerosolen und ihren Inhaltsstoffen am Behälterboden und kann dort über einen Ablauf 7 und ein entsprechendes Ventil 14 niveaugesteuert ausgeschleust werden. Dabei können wie im Zusammenhang mit dem Gaswascher 4 beschrieben entsprechende Füllstandssensoren/schalter LSH (Niveau hoch - Ventil 14 auf) bzw. LSL (Niveau niedrig - Ventil 14 zu) vorgesehen sein.

Über den Auslass 6 kann dann von Aerosolen befreites CO₂-Gas zu einem CO₂-Zwischenspeicher, hier CO₂-Ballon 11, geleitet werden. Von dem Ausgang 6 des Aerosolabscheiders 1 oder alternativ vom CO₂-Ballon 11 kann das gereinigte CO₂-Gas dann dem CO₂-Kompressor 19 zugeführt werden, der das CO₂-Gas, wie in Zusammenhang mit dem Stand der Technik beschrieben, verdichtet. Weiter kann die Einrichtung auch noch wie im Zusammenhang mit dem Stand der Technik beschrieben, eine Einrichtung zum Reinigen und Trocknen des komprimierten gekühlten CO₂-Gases aufweisen, sowie eine CO₂-Verflüssigungsanlage und einen CO₂-Lagertank. Wie aus Fig. 1 hervorgeht, weist die Einrichtung hier auch noch eine Über-Unterdrucksicherung 12 für den CO₂-Ballonbetrieb auf.

Durch die Verwendung des Aerosolabscheiders 1 zusätzlich zu dem Gaswascher 4 kann das von wasserlöslichen Bestandteilen befreite CO₂-Gas auch von Aerosolen und den darin mitgeführten Inhaltsstoffen befreit werden, so dass sich keine Aerosole und darin transportierte Inhaltsstoffe in der Rückgewinnungsanlage niederschlagen können. Insbesondere kann verhindert werden, dass Schäden durch Ablagerungen solcher Inhaltsstoffe in nachgeschalteten Anlageteilen der CO₂-Rückgewinnungsanlage auftreten. Solche Schäden sind beispielsweise massive Korrosionserscheinungen von Rohrleitungen, Apparaten und Maschinen (meistens Lochfraß), Beeinträchtigung der Funktionsfähigkeit des CO₂-Kompressors 19. Massive Verminderung der Standzeit der Arbeitsventile sowie mittelfristige Schädigung von Stopfbüchsen und Kolbenstangen, was zu einer Totalhavarie führen kann.

## Patentansprüche

1. Anlage zum Rückgewinnen von bei der Gärung anfallendem CO₂ mit einem CO₂-Kompressor (19), **dadurch gekennzeichnet, dass** vor dem CO₂-Kompressor (19) ein Aerosolabscheider (1) zum Befreien des CO₂-Gases von Aerosolen angeordnet ist.

2. CO₂-Rückgewinnungsanlage nach Anspruch 1, **dadurch gekennzeichnet, dass** der Aerosolabscheider (1) eine Bewässerungseinrichtung (3) umfasst.

3. CO₂-Rückgewinnungsanlage nach Anspruch 2, **dadurch gekennzeichnet, dass** die Bewässerungseinrichtung (3) mindestens eine Düse umfasst.

4. CO₂-Rückgewinnungsanlage nach mindestens einem der Ansprüche 1 bis 3, **dadurch gekennzeichnet, dass** der Aerosolabscheider (1) zumindest ein flächiges Abscheideelement (2a/2b) umfasst, durch das das aerosolbeladene CO₂-Gas strömt.

5. CO₂-Rückgewinnungsanlage nach einem der Ansprüche 2 bis 4, **dadurch gekennzeichnet, dass** die Bewässerungseinrichtung (3) das zumindest eine Abscheideelement (2a/2b) bewässert.

6. CO₂-Rückgewinnungsanlage nach mindestens einem der Ansprüche 1 bis 5, **dadurch gekennzeichnet, dass** vor dem Aerosolabscheider (1) ein Gaswascher (4) angeordnet ist.

7. CO₂-Rückgewinnungsanlage nach mindestens einem der Ansprüche 1 bis 6, **dadurch gekennzeichnet, dass** ein CO₂-Gasballon (11) zwischen dem Aerosolabscheider und dem CO₂-Kompressor (19) angeordnet ist.

8. Verfahren zum Rückgewinnen von bei der Gärung anfallendem CO₂, **dadurch gekennzeichnet, dass** vor dem Komprimieren das aerosolbeladene CO₂-Gas einem Aerosolabscheider (1) zugeführt wird, und von Aerosolen befreit wird.

9. Verfahren nach Anspruch 8, **dadurch gekennzeichnet, dass** während der Aerosolabscheidung das aerosolbeladene CO₂ bzw. das mindestens eine Abscheideelement (2a/2b) bewässert wird.

10. Verfahren nach einem der Ansprüche 8 oder 9, **dadurch gekennzeichnet, dass** das mit Aerosol beladene CO₂-Gas vor der Aerosolabscheidung durch einen Gaswascher (4) geleitet wird.

11. Verfahren nach einem der Ansprüche 8 bis 10, **dadurch gekennzeichnet, dass** das CO₂-Gas vor dem Komprimieren einem CO₂-Ballon zugeführt wird.

12. Verwendung eines Aerosolabscheiders zum Befreien des CO2-Gases von Aerosolen vor einem CO₂-Kompressor bei der Rückgewinnung von bei der Gärung anfallendem CO₂.

## Claims

1. A system for the recovery of CO₂ arising during fermentation with a CO₂ compressor (19), **characterised in that** an aerosol separator (1) is arranged before the CO₂ compressor (19) to clear the CO₂ gas of aerosols.

2. The CO₂ recovery system according to Claim 1, **characterised in that** the aerosol separator (1) comprises a watering device (3).

3. The CO₂ recovery system according to Claim 2, **characterised in that** the watering device (3) comprises at least one nozzle.

4. The CO₂ recovery system according to at least one of the Claims 1 to 3, **characterised in that** the aerosol separator (1) comprises at least one flat separation element (2a/2b) through which the aerosol-loaded CO₂ gas flows.

5. The CO₂ recovery system according to one of the Claims 2 to 4, **characterised in that** the watering device (3) waters the at least one separation element (2a/2b).

6. The CO₂ recovery system according to at least one of the Claims 1 to 5, **characterised in that** a gas washer (4) is arranged before the aerosol separator (1).

7. The CO₂ recovery system according to at least one of the Claims 1 to 6, **characterised in that** a CO₂ gas balloon (11) is arranged between the aerosol separator and the CO₂ compressor (19).

8. A method of recovering CO₂ arising from the fermentation, **characterised in that** the aerosol-loaded CO₂ gas is fed to an aerosol separator (1) before being compressed and is cleared of aerosols.

9. The method according to Claim 8, **characterised in that** the aerosol-loaded CO₂ or the at least one separation element (2a/2b) is watered during the aerosol separation.

10. The method according to one of the Claims 8 or 9, **characterised in that** the CO₂ gas loaded with the aerosol is passed through a gas washer (4) before the aerosol separation.

11. The method according to one of the Claims 8 to 10, **characterised in that** the CO₂ gas is passed to a CO₂ balloon before being compressed.

12. Use of an aerosol separator for clearing the CO₂ gas of aerosols before a CO₂ compressor in the recovery of CO₂ arising from fermentation.

## Revendications

1. Installation pour la récupération de CO₂ produit lors de la fermentation avec un compresseur de CO₂, **caractérisée en ce qu'**un séparateur d'aérosols (1) destiné à libérer le CO₂ gazeux d'aérosols est disposé en aval du compresseur de CO₂ (19).

2. Installation de récupération de CO₂ selon la revendication 1, **caractérisée en ce que** le séparateur d'aérosols (1) comprend un dispositif d'arrosage (3).

3. Installation de récupération de CO₂ selon la revendication 2, **caractérisée en ce que** le dispositif d'arrosage (3) comprend au moins un gicleur.

4. Installation de récupération de CO₂ selon au moins une des revendications 1 à 3, **caractérisée en ce que** le séparateur d'aérosols (1) comprend au moins un élément séparateur (2a / 2b) plat par lequel s'écoule le CO₂ gazeux chargé d'aérosols.

5. Installation de récupération de CO₂ selon une des revendications 2 à 4, **caractérisée en ce que** le dispositif d'arrosage (3) arrose au moins un élément séparateur (2a / 2b).

6. Installation de récupération de CO₂ selon au moins une des revendications 1 à 5, **caractérisée en ce qu'**un laveur de gaz (4) est disposé en aval du séparateur d'aérosols (1).

7. Installation de récupération de CO₂ selon au moins une des revendications 1 à 6, **caractérisée en ce qu'**un ballon de CO₂ gazeux (11) est disposé entre le séparateur d'aérosols et le compresseur de CO₂ (19).

8. Procédé de récupération de CO₂ produit lors de la fermentation, **caractérisé en ce qu'**avant la compression, le CO₂ gazeux chargé d'aérosols est amené jusqu'à un séparateur d'aérosols (1) et est libéré d'aérosols.

9. Procédé selon la revendication 8, **caractérisé en ce que**, pendant la séparation d'aérosols, le CO₂ chargé d'aérosols ou encore ledit au moins un élément séparateur (2a / 2b) est arrosé.

10. Procédé selon une des revendications 8 ou 9, **caractérisé en ce que** le CO₂ gazeux chargé d'aérosols est conduit, avant la séparation d'aérosols, à travers un laveur de gaz (4).

11. Procédé selon une des revendications 8 à 10, **caractérisé en ce qu'**avant la compression, le CO₂ gazeux est amené jusqu'à un ballon de CO₂.

12. Utilisation d'un séparateur d'aérosols pour libérer le CO₂ gazeux d'aérosols en aval d'un compresseur de CO₂ lors de la récupération de CO₂ produit lors de la fermentation.
